# EUROPÄISCHE PATENTSCHRIFT

(11) **EP 0 355 607 B1**
(45) Veröffentlichungstag und Bekanntmachung des Hinweises auf die Patenterteilung: **09.11.1994**
(21) Anmeldenummer: 89114851.2
(22) Anmeldetag: 10.08.1989
(51) Int. Cl.: H04L 7/033, H04L 7/00, H03K 5/135

(54) **Schaltungsanordung zum Synchronisieren eines asynchronen digitalen Signals auf einen Systemstakt**
Circuitry for the synchronisation of an asynchronous digital signal with a system clock
Circuit de synchronisation d'un signal numérique asynchrone à une horloge du système

(30) Priorität: 23.08.1988 DE 3828606
(43) Veröffentlichungstag der Anmeldung: 28.02.1990
(73) Patentinhaber: SIEMENS AKTIENGESELLSCHAFT, 80333 München (DE)
(72) Erfinder: Glöss, Bernhard, Dipl.-Ing., D-8000 München 83 (DE)

(56) Entgegenhaltungen:
- EP-A- 0 034 321
- DE-A- 3 105 905
- US-A- 3 950 705

## Beschreibung

Die Erfindung betrifft eine Schaltungsanordnung zum Synchronisieren nach dem Oberbegriff des Anspruchs 1.

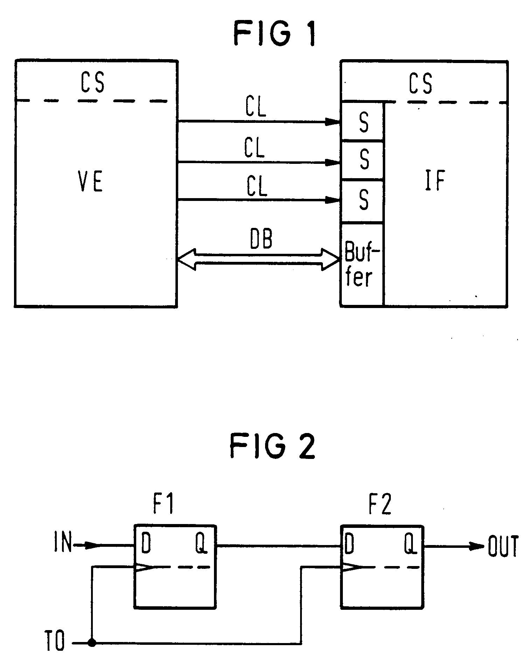

FIG 1 zeigt einen speziellen Anwendungsfall einer Synchronisierschaltung S der obengenannten Art, bei dem zwei zueinander asynchrone Systeme (Verarbeitungseinheit VE und serielles Interface IF) mit jeweils eigener, unabhängiger Taktversorgung CS über Steuerleitungen CL und einen Datenbus DB miteinander gekoppelt werden. Die Synchronisierschaltung soll dabei aus der Rückflanke eines asynchronen, von der Verarbeitungseinheit gelieferten Steuersignals einen Impuls bilden, der synchron zum Systemtakt CK des seriellen Interface ist und innerhalb eines festen Zeitfensters ZF im Verarbeitungszyklus VZ des seriellen Interface liegt. Dieser Steuerimpuls bewirkt z.B., daß die Daten aus einem Buffer in einen internen Speicher des seriellen Interface übernommen werden.

In FIG 2 ist eine aus der Europäischen Patentanmeldung EP-A-0 034 321 bekannte Schaltungsanordnung der Art dargestellt, von der die Erfindung ausgeht. Sie besteht aus zwei Synchronisierkippstufen F1 und F2, wobei die vorteilhafte Wirkung der zweiten Synchronisierkippstufe F2 erst bei Auftreten von metastabilen Zuständen der ersten Synchronisierkippstufe F1 zur Geltung kommt. Metastabile Zustände treten dann auf, wenn die erste Kippstufe das asynchrone Signal im ungünstigsten Fall gerade während dessen ansteigender bzw. abfallender Flanke abtastet. Am Ausgang der ersten Synchronisierkippstufe kommt es dann zu Störimpulsen und Einschwingvorgängen. Um den Einfluß dieser Störungen gering zu halten, wird die erwähnte zweite Synchronisierkippstufe nachgeschaltet, die das gestörte Ausgangssignal der ersten Synchronisierkippstufe erst mit der nächstfolgenden Taktflanke abtastet. Das Ausgangssignal OUT der zweiten Synchronisierkippstufe ist damit in wesentlich geringerem Umfang gestört.

Erhöht man die Störsicherheit der Anordnung gemäß FIG 2 durch Vergrößern der Periodendauer des Taktes T0, so erhöht sich dadurch die Unschärfe der Abtastung des asynchronen digitalen Signals. Ist im speziellen die Periodendauer des Taktes T0 größer als die Dauer eines z.B. sehr kurzen asynchronen digitalen Signals, so kann dieses nicht mehr mit Sicherheit erkannt werden. Bei bestimmten Anwendungen, wie z.B. der vorgenannten ist es besonders von Nachteil, daß sich die Länge des synchronen Ausgangssignals nach der Länge des asynchronen digitalen Signals richtet.

Der Erfindung liegt die Aufgabe zugrunde, für ein beliebig langes asynchrones digitales Signal bei großer Störsicherheit gegenüber metastabilen Zuständen einen synchronen Ausgangsimpuls definierter Länge zu erzeugen.

Diese Aufgabe wird bei einer gattungsgemäßen Schaltungsanordnung. durch die kennzeichnenden Merkmale des Anspruchs 1 gelöst.

In einem Unteranspruch ist eine weitere Ausgestaltung der Erfindung angegeben. Durch sie ist es möglich, den gegenüber dem Takt eines bestimmten Systems (in FIG 1 das serielle Interface IF) synchronen Ausgangsimpuls OUT der Synchronisierschaltung S in ein beliebiges Zeitfenster ZF innerhalb eines Verarbeitungszyklusses VZ dieses Systems zu legen.

Es folgt eine Liste von den Figuren der Zeichnung:
- FIG 1: zeigt die Anwendung der erfindungsgemäßen Synchronisierschaltung S bei der Datenübertragung zwischen zwei Systemen.
- FIG 2: zeigt den Aufbau einer Schaltungsanordnung der Art, von der die Erfindung ausgeht.
- FIG 3: zeigt den Aufbau der erfindungsgemäßen Schaltungsanordnung.
- FIG 4: zeigt ein Zeitdiagramm zur Erläuterung der Betriebsweise der erfindungsgemäßen Schaltungsanordnung gemäß Figur 3.

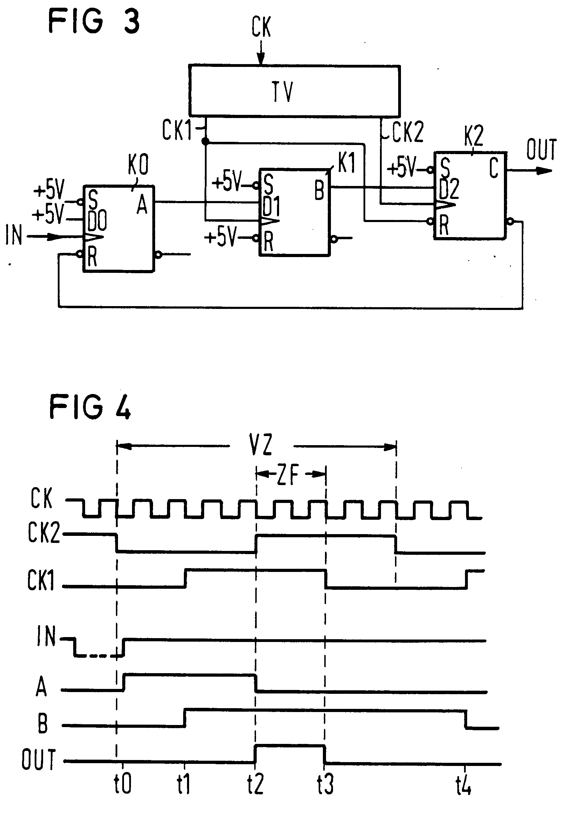

Nachstehend wird ein Ausführungsbeispiel der Erfindung anhand der FIG 3 und 4 näher erläutert.
Die Schaltungsanordnung gemäß FIG 3 besteht im wesentlichen aus drei hintereinander geschalteten Kippstufen (D-Flip-Flops mit Set/Reset-Eingängen), nämlich einer Anreiz-Kippstufe K0, einer ersten Synchronisierkippstufe K1 und einer zweiten Synchronisierkippstufe K2, sowie einer Taktverarbeitung TV, die aus dem Systemtakt CK die für die Synchronisierschaltung benötigten Takte CK1 und CK2 ableitet.
Die Anreiz-Kippstufe K0 speichert das asynchrone digitale Signal IN, um den Anreiz für die Synchronisierschaltung zu statisieren. Sie wird gemäß FIG 4 zum Zeitpunkt t0 mit der Rückflanke des asynchronen digitalen Signals in den aktiven Zustand gesetzt.

Mit der nächstfolgenden positiven Flanke des ersten Taktes CK1 (Zeitpunkt t1) wird die erste Synchronisierkippstufe K1 gesetzt.
An dem Ausgang B dieser Kippstufe kann es aus den bereits genannten Gründen zu Störimpulsen und Einschwingvorgängen kommen, deren Länge ein Vielfaches der Impulsverzögerungszeit der eingesetzten Kippstufe betragen kann.
Um den Einfluß dieser Störungen auf den Ausgang C der zweiten Synchronisierstufe K2 zu vermeiden, ist die positive Flanke des zweiten Taktes CK2 gegenüber der positiven Flanke des ersten Taktes um die für das Abklingen von Einschwingvorgängen erforderliche Zeit verschoben. Da die Periodenlänge der Takte CK1 und CK2 von der Periodenlänge des Systemtaktes CK praktisch unabhängig ist, kann durch die erwähnte Phasenverschiebung (in der Praxis um mindestens das Zehnfache der Impulsverzögerungszeit der ersten Synchronisierkippstufe) zwischen dem ersten Takt und dem zweiten Takt unabhängig vom Systemtakt immer sichergestellt werden, daß das Signal am Ausgang B der ersten Synchronisierkippstufe störungsfrei abgetastet wird.

Am Ausgang C der zweiten Synchronisierkippstufe erscheint zum Zeitpunkt t2 aufgrund der vorher erwähnten Abtastung der synchrone Ausgangsimpuls OUT, während das andere Ausgangssignal der zweiten Synchronisierkippstufe die Anreiz-Kippstufe über den Reset-Eingang in den empfangsbereiten Zustand zurücksetzt. Zum Zeitpunkt t3 setzt der erste Takt die zweite Synchronisierkippstufe zurück, indem er mit seiner Rückflanke auf den invertierten Reset-Eingang dieser Kippstufe wirkt.
Die Länge des synchronen Ausgangsimpulses wird somit durch die Überlagerung Impulsdauer der beiden Takte CK1 und CK2 bestimmt. Durch Veränderung der Zeitdauer dieser Überlagerung läßt sich demzufolge die Länge des sychronen Ausgangsimpulses variieren.

Die beiden Takte CK1 und CK2 besitzen bevorzugterweise eine Phasenverschiebung von π/2 und ein Verhältnis Impulsdauer zu Impulspause von 1 zu 1.

Wählt man die Periodendauer der beiden Takte CK1 und CK2 so groß wie die Dauer des Verarbeitungszyklusses VZ (siehe FIG 4), dann liegt der synchrone Ausgangsimpuls immer in einem festen Zeitfenster ZF des Verarbeitungszyklusses, d.h. er besitzt immer eine feste zeitliche Lage innerhalb des Verarbeitungszyklusses.
Durch gleichzeitiges Verschieben der Phasenlage der beiden Takte CK1 und CK2 gegenüber dem Verarbeitungszyklus läßt sich diese zeitliche Lage (Zeitfenster ZF) des synchronen Ausgangsimpulses innerhalb des Verarbeitungszyklusses variieren.

Zum Zeitpunkt t4 wird durch die positive Flanke des ersten Taktes schließlich das Ausgangssignal der zurückgesetzten Anreiz-Kippstufe übernommen.

## Patentansprüche

1. Schaltungsanordnung zum Synchronisieren eines asynchronen digitalen Signals (IN) auf einen Systemtakt (CK), die zwei taktflankengesteuerte Synchronisierkippstufen (K1, K2) beinhaltet, wobei ein Ausgang (B) der ersten Synchronisierkippstufe (K1) mit einem Signal-Eingang (D2) der zweiten Synchronisierkippstufe (K2), die den synchronen Ausgangsimpuls (OUT) abgibt, verbunden ist,
**gekennzeichnet**
durch folgende Merkmale:
a) Sie weist zusätzlich eine Anreizkippstufe (K0) auf, die von einer Flanke des asynchronen digitalen Signals, das auf den Takt-Eingang dieser Kippstufe wirkt, unmittelbar gesetzt wird,
b) ein Ausgang (A) der Anreizkippstufe ist mit den Signal-Eingang (D1) der ersten Synchronisierkippstufe verbunden, die durch die eine Flanke eines von dem Systemtakt abgeleiteten ersten Taktes (CK1) getaktet wird,
c) die zweite Synchronisierkippstufe wird durch die eine Flanke eines bezüglich des ersten Taktes gleichfrequenten zweiten Taktes (CK2) getaktet und durch die andere Flanke des ersten Taktes rückgesetzt,
d) die Phasenverschiebung zwischen dem ersten und dem zweiten Takt ist so gewählt, daß Einschwingvorgänge des durch metastabile Zustände gestörten Ausgangssignals der ersten Synchronisierkippstufe bereits abgeklungen sind, wenn die eine genannte Flanke des zweiten Taktes dieses Ausgangssignal abtastet,
e) die Impulsdauer oder die Impulspause des ersten Taktes ist so gewählt, daß es bei der gewählten Phasenverschiebung zwischen erstem und zweitem Takt in jedem Fall zu einer Überlagerung der Impulsdauer oder der Impulspause der beiden Takte kommt, und daß die Zeitdauer einer solchen Überlagerung der gewünschten Länge des an den einen Ausgang (C) der zweiten Synchronisierkippstufe abgegebenen synchronen Ausgangsimpulses entspricht,
f) der andere Ausgang der zweiten Synchronisierkippstufe ist mit dem Reset-Eingang der Anreizkippstufe verbunden.

2. Schaltungsanordnung gemäß Anspruch 1,
**dadurch gekennzeichnet,**
daß die Periodendauer des ersten und zweiten Taktes (CK1 und CK2) der Dauer eines Verarbeitungszyklusses (VZ) eines Systems (IF) entspricht, in welches das asynchrone digitale Signal (IN) einsynchronisiert werden soll.

## Claims

1. Circuit arrangement for synchronizing an asynchronous digital signal (IN) with a system clock (CK), which contains two clock-edge-triggered synchronizing flip-flops (K1, K2), one output (B) of the first synchronizing flip-flop (K1) being connected to a signal input (D2) of the second synchronizing flip-flop (K2) that outputs the synchronous output signal (OUT), characterized by the following features:
a) it additionally has an event signal flip-flop (K0) which is set directly by an edge of the asynchronous digital signal that acts on the clock input of said flip-flop,
b) one output (A) of the event signal flip-flop is connected to the signal input (D1) of the first synchronizing flip-flop clocked by the one edge of a first clock (CK1) derived from the system clock,
c) the second synchronizing flip-flop is clocked by the one edge of a second clock (CK2) that has the same frequency as the first clock and is reset by the other edge of the first clock,
d) the phase shift between the first and the second clock is selected in such a way that transients of the output signal of the first synchronizing flip-flop disturbed by metastable states have already decayed when the aforesaid edge of the second clock senses said output signal,
e) the pulse duration or the pulse pause of the first clock is selected so that an overlaying of the pulse duration or the pulse pause of the two clocks is produced in every case between the first and second clock for the selected phase shift, and in that the time duration of such an overlaying corresponds to the desired duration of the synchronous output pulse output at the one output (C) of the second synchronizing flip-flop,
f) the other output of the second synchronizing flip-flop is connected to the reset input of the event signal flip-flop.

2. Circuit arrangement according to Claim 1, characterized in that the period duration of the first and second clock (CK1 and CK2) corresponds to the duration of a processing cycle (VZ) of a system (IF) with which the asynchronous digital signal (IN) is to be synchronized.

## Revendications

1. Montage pour synchroniser un signal numérique asynchrone (IN) sur une cadence (CK) de système, qui comporte deux étages (K1, K2) à bascule de synchronisation commandés par les flancs d'impulsions de cadence, une sortie (B) du premier étage (K1) à bascule de synchronisation étant reliée à une entrée (D2) de signal du second étage (K2) à bascule de synchronisation, qui fournit l'impulsion (OUT) de sortie synchrone, remarquable par les caractéristiques suivantes :
a) il comporte en outre un étage (KO) à bascule d'excitation, qui est positionné directement par un flanc du signal numérique asynchrone agissant sur l'entrée de cadence de cet étage à bascule,
b) une sortie (A) du circuit à bascule d'excitation est reliée à l'entrée (D1) de signal du premier étage à bascule de synchronisation, qui est commandé de façon cadencée par l'un des flancs d'une première cadence (CK1) dérivée de la cadence de système,
c) le second étage à bascule de synchronisation est commandé de façon cadencée par un flanc d'une seconde cadence (CK2), qui a la même fréquence que la première cadence, et est ramené à l'état initial par l'autre flanc de la première cadence,
d) le déphasage entre les première et seconde cadences est choisi, de manière que les phénomènes transitoires du signal de sortie, perturbé par des états métastables, du premier étage de synchronisation aient déjà disparus lorsque l'un desdits flancs de la seconde cadence se produit,
e) la durée des impulsions ou la durée de la pause entre les impulsions de la première cadence est choisie de sorte que, pour le déphasage choisi, entre les première et seconde cadences, il se produit dans tous les cas un recouvrement des deux intervalles d'impulsions ou des intervalles de pause entre les impulsions des deux cadences, et que la durée de ce recouvrement corresponde à la longueur souhaitée de l'impulsion de sortie synchrone fournie à l'une (C) des sorties du second étage à bascule de synchronisation,
f) l'autre sortie du second étage à bascule de synchronisation est reliée à l'entrée de remise à l'état initial de l'étage à bascule d'excitation.

2. Montage suivant la revendication 1,
caractérisé en ce que
la durée de la période des première et seconde cadences (CK1 et CK2) correspond à la durée d'un cycle (VZ) de traitement d'un système (IF), dans lequel le signal (IN) numérique asynchrone doit être synchronisé.
